# EUROPEAN PATENT SPECIFICATION

(11) **EP 2 514 500 B1**
(45) Date of publication and mention of the grant of the patent: **02.07.2014**
(21) Application number: 11163166.9
(22) Date of filing: 20.04.2011
(51) Int. Cl.: B01D 33/21, B01D 33/23

(54) **Rotary disc filter structure**
Rotationsfilterstruktur
Structure pour filtre à disque rotatif

(43) Date of publication of application: 24.10.2012
(73) Proprietor: Viggiano, Vincenzo Donato, 85020 Atella (IT)
(72) Inventor: Viggiano, Vincenzo Donato, 85020 Atella (IT)
(74) Representative: Gustorf, Gerhard

(56) References cited:
- EP-A1- 2 292 308
- WO-A1-2009/011862
- WO-A1-2010/128944
- DE-A1-102007 018 054

## Description

### Field of the invention

The rotary disc filter is used for separating the solid parts in suspension from the treated liquid up to micro-granulometries. The filter is made up of a tank divided into three parts: one for supplying the liquid to be treated, one for discharging the filtrate, one for discharging the overflow and of one or more pairs of filter discs. The liquid to be treated is conveyed between the discs - and while it filters through filter membranes - the solids are withheld between the discs and they are deposited in the lower part of the filter chamber. When the deposit reaches a given height it is automatically discharged due to the rotary motion of the discs. Due to the microfiltration characteristics thereof the self-cleaning disc filter is applied both for recovering the reutilisable material and for separating polluting material.

Rotary disc filters are, generally, made up of a central drum arranged longitudinally and bearing - on the outer surface - the filter discs. Such discs, parallel to each other and arranged transversely to the drum, coaxially thereto, have, on the two surfaces orthogonal to the axis, the filter membrane. The liquid flows inside the drum and, through the suitable openings obtained on the outer surface thereof, passes in the chamber inside the discs then - due to the available hydraulic charge - permeates the membrane which withholds the suspended solids. The liquid filtrate is collected in the tank in which the machine is inserted, so as to be conveyed towards the subsequent treatment station. The withheld suspended solids instead remain on the inner surface of the membrane, causing clogging and hence reducing the permeability thereof. This implies a reduction of the amount treated by the machine. Hence there occurs a reduction of the liquid level in the tank in which the machine is inserted and an increase of the level in the loading reservoir upstream of the filter. Such variation is detected by a suitable sensor which controls the rotation of the drum and of the discs integral thereto, which are submerged by slightly more than half. Following the rotation, the still clean part of the membrane, initially positioned above the free surface of the liquid, gets into contact therewith; the dirty membrane is rotated upwards where there is arranged a counter-washing system, provided by means of nozzles arranged outside each disc. The countercurrent washing flow allows cleaning the membrane moving away the withheld solids which drop into a suitable duct, arranged inside the drum. The duct collects the counter-washing liquid and conveys it towards the outside the machine in a special tank intended for such purpose.

In order to facilitate and make the membrane replacement operation in case of breakage less costly, the filter surface of the discs is divided into annular portions: the membrane is glued or, however, fixed in any other manner on a suitable framework inserted in special radial support elements, constrained to the side surface of the drum. The discs are, thus, closed along the outer circumference by components which also provide the coupling between the radial support elements of the membrane-holding frameworks. The entire machine is supported by a bearing structure (framework of the machine).

According to the prior art the discs are provided by means of a plurality of membrane-holding frameworks, with annular section configuration, fixed through relative insertion into special guides provided laterally on radial elements, thus blocked perimetrally by arched elements to form a circumferential sealing ring.

A rotary disc filter structure as set forth in the preamble of claim 1 is known from WO 2009/011862 A1. Here the radial spokes are made of voluminous columns provided with stiffening frameworks the feet of which are mutually fastened by bolts. The frames supporting the filter membrane are simply inserted between the spokes, and no means are provided for supporting the thrust of the liquid pressure on the membrane in order to avoid deformations of the frame in the plane of the membrane.

A similar rotary disc filter is described in EP 2 292 308 A1 which however, due to its simple and light construction, is less rigid.

### Description of the specific technical problem

Thus, such solution according to the prior art reveals the drawback of requiring a relatively considerable thickening dimensioning of the radial fastening elements and of the perimeter strips of the frameworks to bear the pressure of the filtered liquid without deformations, nevertheless sealing reinforcement solutions by means of the radial elements, at the most stressed points being required so that such need of over-dimensioning the opaque pieces according to the prior art limit the filter extension, i.e. the extension of the membrane.

In order to confer to the sections of the membrane-holding framework a given rigidity, so that they are not deformed due to the thrust of the liquid, in the disc filters available in the market there are used metal frameworks or solutions made of plastic material which require increasing the transverse dimension of the sides of the framework or the use of mobile elements, such as, for example, throttle systems, which allow blocking the framework preventing deformations thereof is indispensable.

### Objects of the invention

Thus, the main object of the present invention, within the abovementioned context, is to provide a solution concept capable of applying the filter membrane to the discs for rotary disc filters so as to maximise the extension of the membrane portion according to the extension of the relative supports;
another object of the present invention is that of attaining the previous object through a solution concept which, at the same time, prevents the possibility of deformations of the supports under pressure;
still another object of the present invention is that of attaining the aforementioned objects through a solution concept as simple and modular as possible;
a further object of the present invention is that of attaining the aforementioned objects through a solution concept that is simple and efficient, safe in operation and relatively inexpensive considering the results practically obtained therewith.

### Summary of the solution concept

These and other obj ects can be attained with the rotary disc filter structure, of the type made up of a central drum bearing - on the outer surface - filter discs parallel to each other arranged coaxially transversal with respect to the drum and provided with a filter membrane on the two surfaces orthogonal to the axis. Said filter structure comprises a plurality of modules with annular section made up of pairs of radial spokes shaped with a radial part and a circumferential part consecutively associable in series with the circumferential parts of the adjacent spoke to form two annular surfaces on the two opposite faces of the disc. Circumferential closing elements are provided for closing the annular sections arranged consecutively in series between each pair of said spokes. Frames supporting the filter membrane reproduce the perimeter of said annular sections proximally constrained to said circumferential parts of said pairs of spokes and distally constrained to said circumferential elements for closing said annular sections. Side covers are of the radial parts of said pairs of radial spokes attached to the radial part of said frame supporting the filter membrane.

### Description of the attached drawings

Further characteristics and advantages of the rotary disc filter structure according to the present invention will be more apparent from the following detailed description of a preferred but not exclusive embodiment thereof, represented solely by way of nonlimiting example in seventeen attached drawings, wherein:
Figures 1 and 2 respectively show in perspective and front view a filter module of a rotary disc filter comprising the disc structure according to the present invention;
Figures 3 to 23 show an equivalent number of perspective views of components and assemblies of components of the rotary disc filter structure according to the present invention;

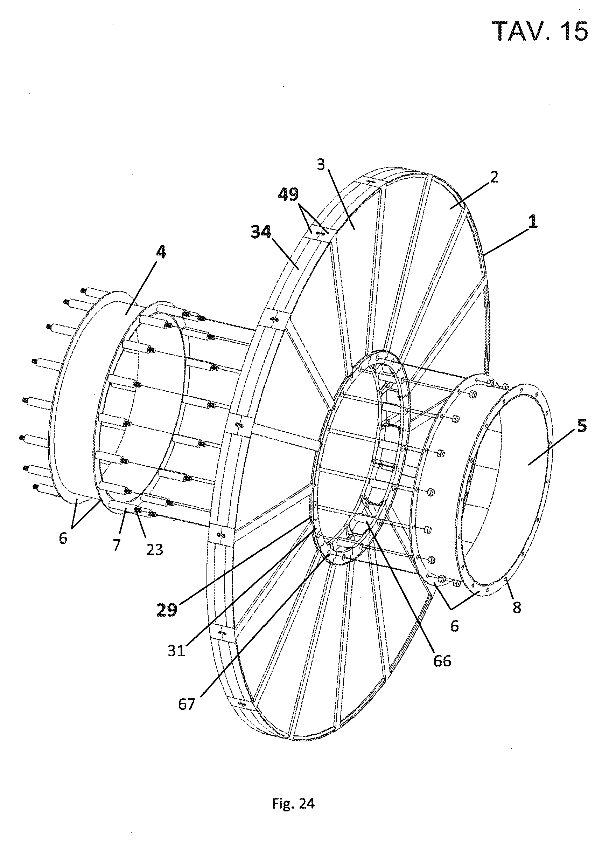

Figure 24 shows an exploded perspective view of the filter module of a rotary disc filter comprising the disc structure according to the present invention;

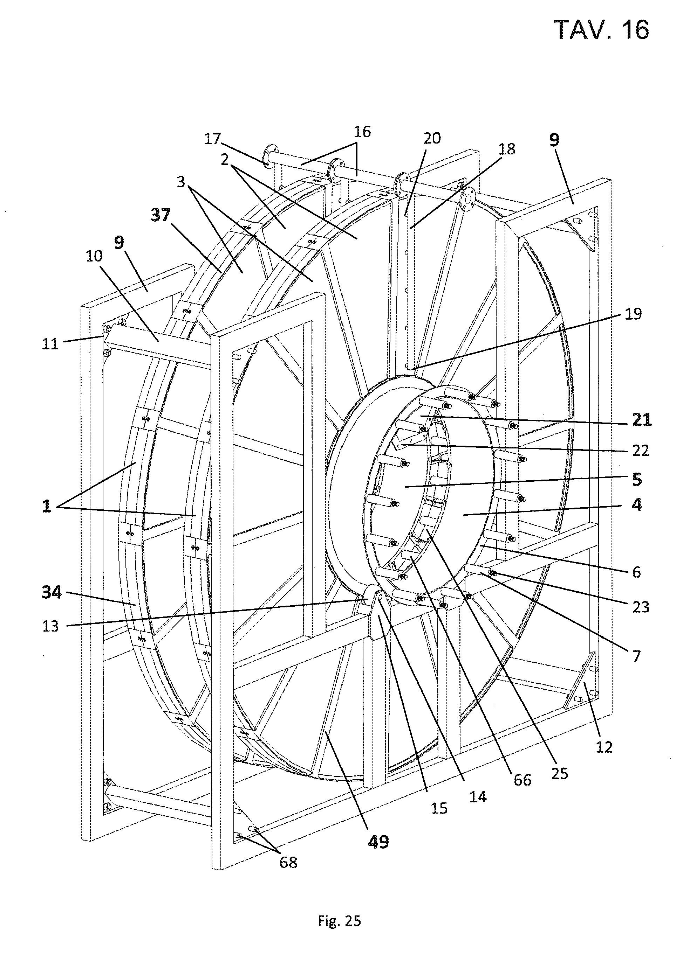

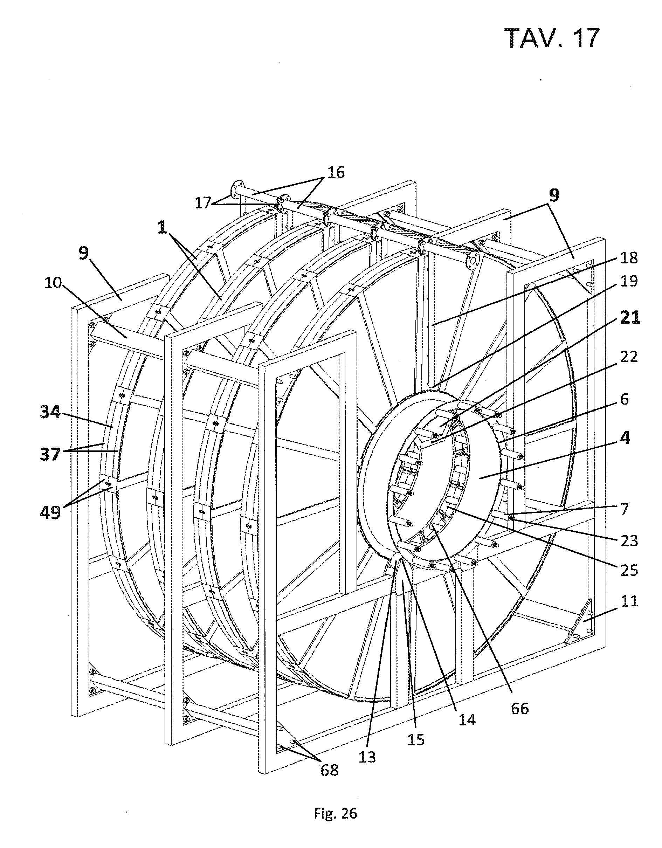

Figures 25 and 26 show an equivalent number of perspective views of the assembly of a plurality of filter modules of a rotary disc filter comprising the disc structure according to the present invention.

### Description of the embodiment

With reference to such figure illustrated herein is an innovative rotary disc filter subject of a parallel industrial invention patent application on behalf of the same applicant having the title "rotary disc filter structure".

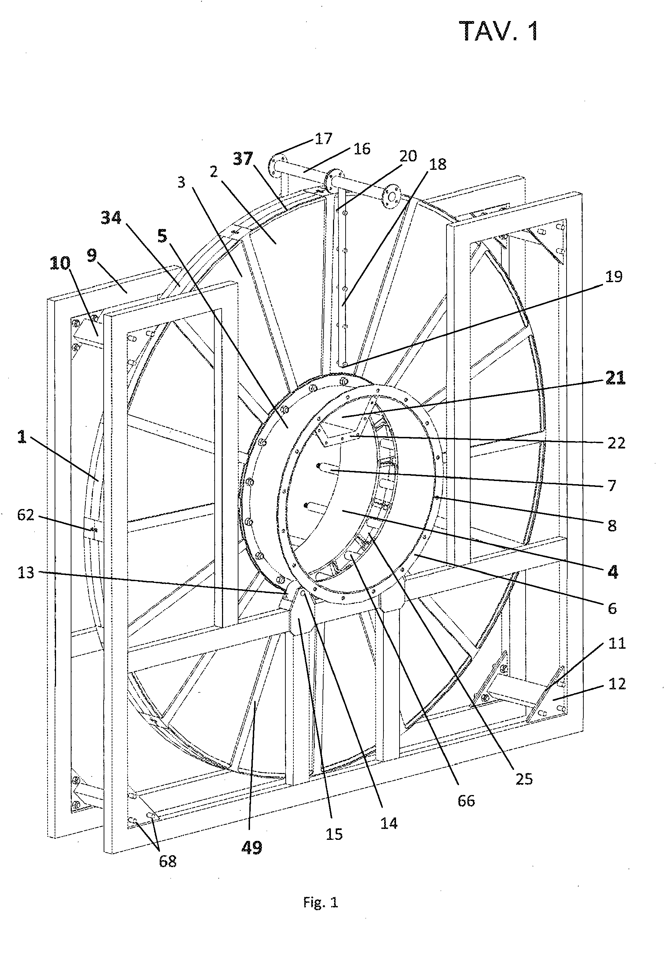

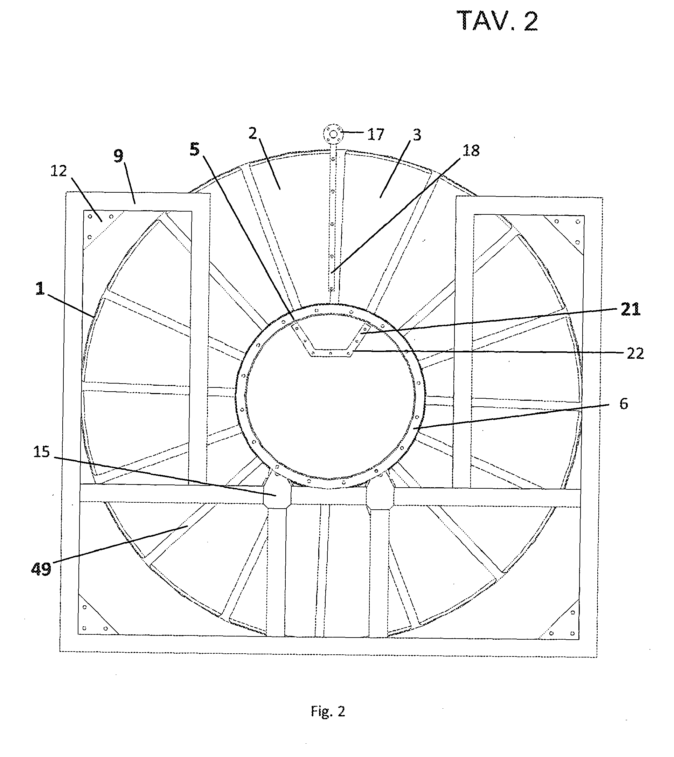

In particular in figures 1 and 2, reference number 1 is used to indicate the base module, regarding only one filter disc 1 divided, for the sake of simplicity and economicity of replacing the membrane 2, in annular sections 3. The disc 1 is inserted between two central drum sections 4 and 5, each of which is made up of a hollow cylinder on whose side surface there are fixed, at the two bases, two flanges 6. The two drum sections 4 and 5, between which there is arranged the disc 1, have different structural characteristics: the first 4 has - on the outer surface of the flanges 6 in the direction parallel to the axis of the machine - sixteen pins 7, per each side, having the free end threaded; the second drum section 5 has, on each flange 6, sixteen holes 8 at the sixteen partially threaded pins 7 of the adjacent drum section 4.

The described system allows coupling, by means of nuts, between the two drum sections 4 and 5. The support structure of the disc-drum system, i.e. the framework of the filter, is obtained with transversal modules 9, joined by means of suitable coupling means 10, arranged longitudinally and having - at the ends - two perforated triangular plates 11 for coupling - by means of bolts - with the corresponding plates 12 of the framework modules 9. Each drum section 4 and 5 lies on two wheels 13 provided with bearings and fixed, by means of a pin 14 and suitable plates 15, to the elements 9 of the framework of the machine.

The two wheels 13 are at contact with the outer surface of the drum sections 4 and 5 and this allows the drum-disc system to rotate with respect to the module 9 of the framework. The base module is completed by the counter-washing system, made up of suitably long pipes 16, arranged horizontally above the disc 1, in the direction parallel to the axis thereof 1. Such pipes are provided with perforated flanges 17 for coupling in series thereof - by means of bolts - depending on the number of discs 1 to be introduced into the machine and, thus, the desired length. To each section 16 of the pipe there is fixed a vertical pipe 18 closed at the farthest end 19 and bearing the washing nozzles 20 of the membrane 2, equally spaced from each other and directed towards the filter surface of the disc 1. The counter-washing system also comprises the duct 21 for collecting and discharging the wastewater deriving from the washing of the membrane 2. It is also provided with a modular solution: each base module has a section 21 of a duct, arranged inside the central drum and provided with perforated flanges 22 for coupling - by means of bolts - to the sections 21 of the adjacent modules.

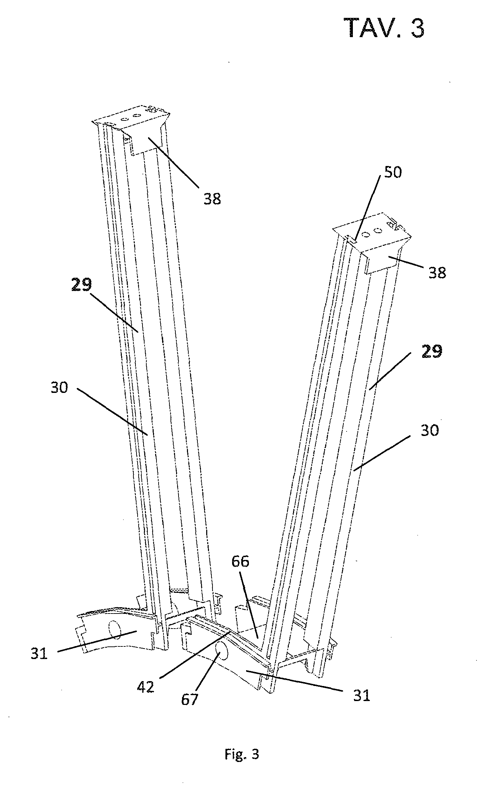

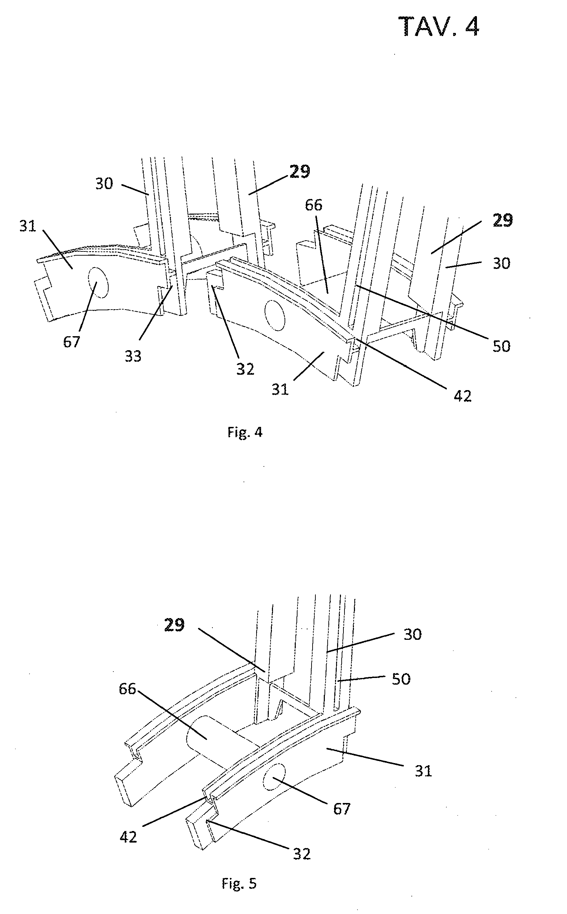

In order to facilitate the operations for replacing the membrane 2 and allow changing - in case of local damage - only a small portion thereof 2, the filter surface of each face of the disc 1 is divided into sixteen annular sections 3. The disc 1 is, thus, provided as assemblies of sixteen modules, each, in turn, obtained by joining four different parts. The bearing structure of the disc 1 is essentially made up of radial elements 29, similar to the spokes of a wheel, which are connected to each other by means of suitable embeddings, as illustrated in Fig 3, Fig 4 and Fig 5. Such elements have a radial part 30 and a circumferential part 31 which, following the assembly and positioning between the two adjacent drum sections 4 and 5, is at the relative flanges 6. The free space between the two radial parts 30 of each spoke 29 forms the conduit for the passage of the liquid between the chambers inside each annular section 3 of the disc 1, indispensable to avoid drawing the liquid during the rotation of the disc-drum system which would thus lead to an increase of the resistance offered by the fluid and, thus, of the torque required for the rotation.

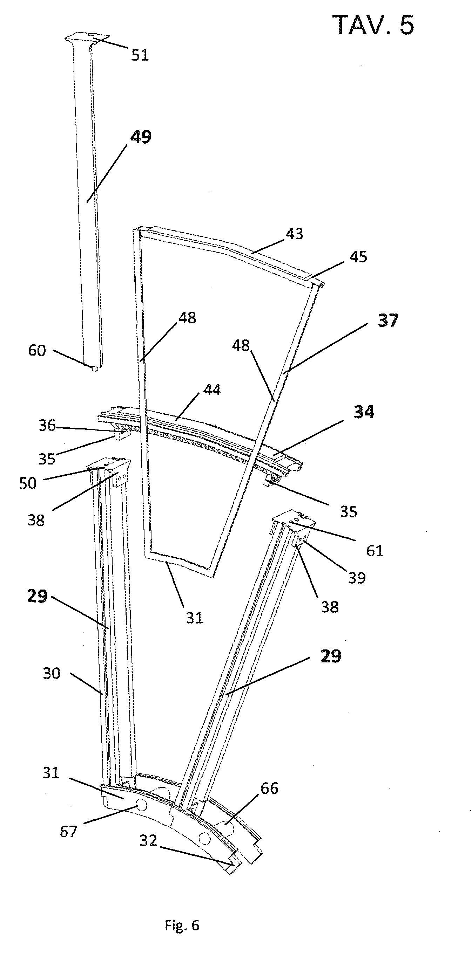

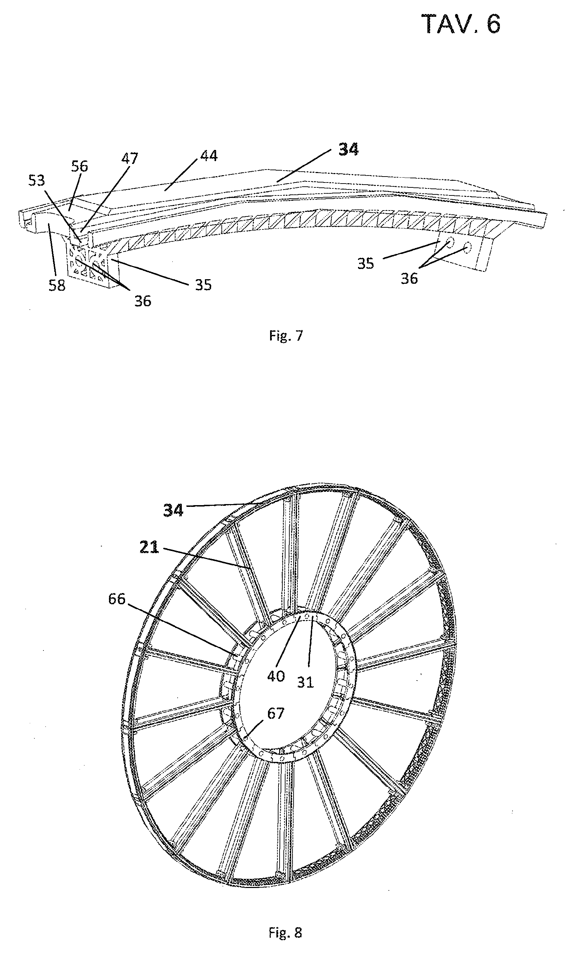

The fitting of the spokes 29 is obtained by providing for that the front 32 and rear 33 profiles of the circumferential part 31 are conjugated profiles: they were defined in such a manner that the front profile 32 of an element 29 perfectly fits with the rear profile 33 of the subsequent element 29. Such elements 29 are, thus, inserted in series by simply approaching the new spoke 29 to be positioned to the one 29 already arranged, so as to coincide the abovementioned profiles 32 and 33. The last spoke 29 to be inserted however requires to be forced slightly, allowing, upon completing the wheel, to keep the sixteen radial elements 29 joined, without using other types of coupling such as, for example, the use of bolts. This also possible due to the fact that the structure is completed by inserting, between each pair of adjacent spokes 29, an element 34 for closing the annular section 3, shown in Fig 6. Such component 34, schematised in Fig 7, has - in the inner part - two fins 35, arranged radially and bearing two holes 36.

The two fins 35, following the positioning of this coupling element 34 between the two radial elements 29 for supporting the membrane-holding framework 37, fit with the corresponding surfaces 38 present on the two sides of the outermost part of the spokes 29. Such surfaces 38 are provided with holes 39 for coupling - by means of bolts - with the abovementioned fins 35 of the element 34 for coupling the spokes 29.

The result of the described assembly is a wheel illustrated in Fig 8. It is defined by the spokes 29 and it is delimited by the elements 34, interposed therebetween 29 and arranged at the outer surface of the wheel.

It can be observed how the joining of the radial elements 29 leads to the formation of two annular surfaces 40 on the two opposite faces of the disc 1, at the circumferential part 31 of the spokes 29. These surfaces 40 are at contact with the corresponding surfaces of the flanges 6 of the drum sections 4 and 5 between which the disc 1 is inserted.

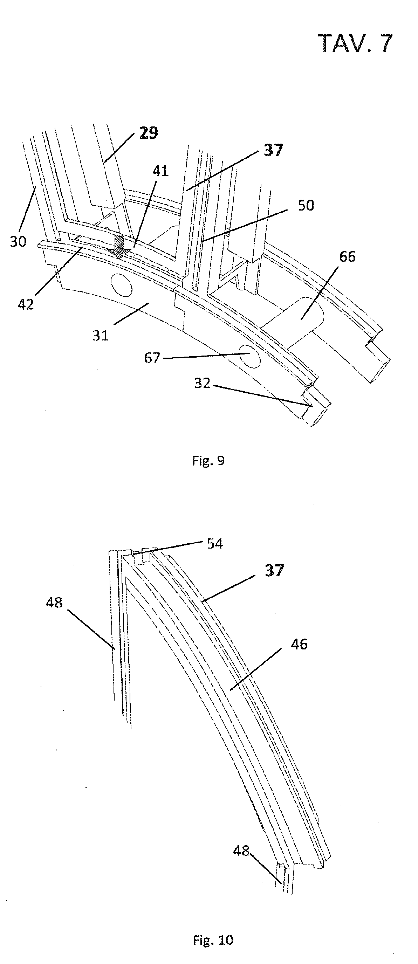

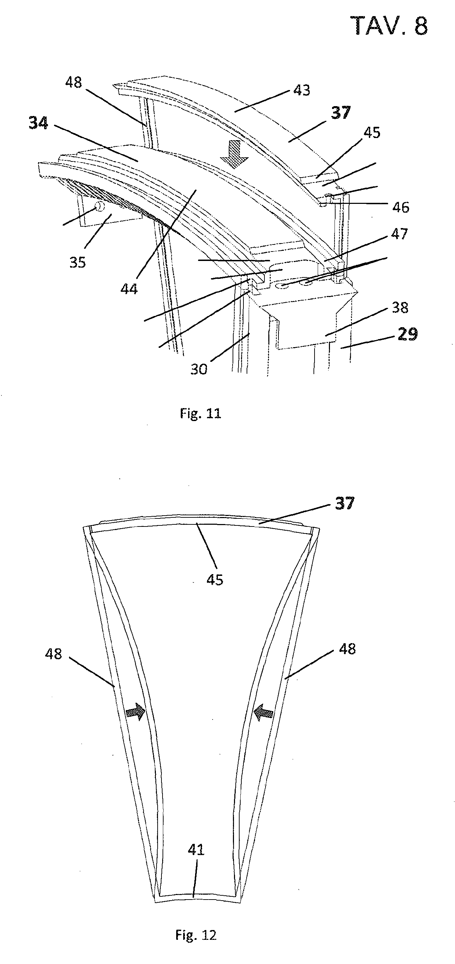

Each filter membrane 2 is fixed on a frame 37 which reproduces the perimeter of the annular section 3: the central area forms, for each section 3, the filtering surface. The membrane-holding frame 37 is approached, by means of a direct radial movement towards the axis of the disc 1 to the two adjacent radial elements 29 (spokes) and to the closing element 34 inserted between the spokes 29. At the end of the approaching movement, the lower section 41 of the membrane-holding frame 37, i.e. the one arranged at a lesser distance from the axis of the disc 1, will be inserted in a special seat 42 obtained in the outermost part of the circumferential portion 31 of the spoke 29, as indicated in Fig 9. Similarly, the outermost part 43 of the membrane-holding frame 37 will perfectly fit with the corresponding part 44 of the closing element 34 for coupling the spokes 29: along the entire section 45 of the membrane-holding frame 37 at a greater distance from the axis there extends a sort of tooth 46 with rectangular section (Fig 10) which ends up fitted in a special seat 47 obtained in the element 34 for the external delimitation of the wheel, as illustrated in Fig 11.

The frame 37 bearing the filter membrane 2 is provided so that, following the described coupling, the outer surface 43 thereof perfectly fits with the external surface 44 of the closing element 34 for coupling the spokes 29.

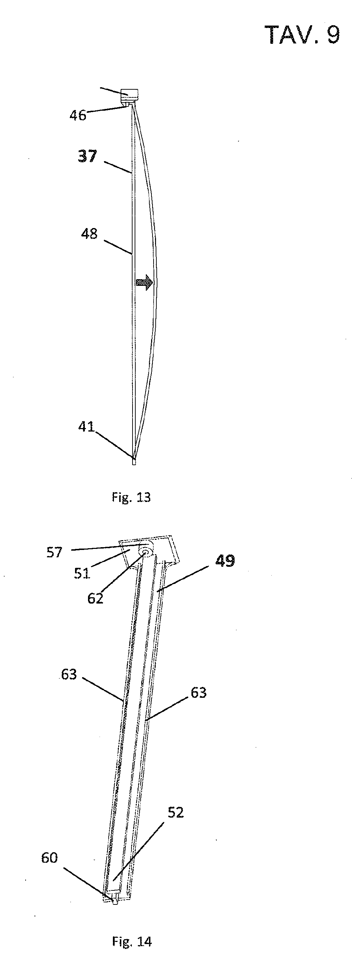

From the insertion of the sections of the membrane-holding frame 37 at a lesser 41 and greater 45 distance from the axis in the relative seats of the spoke 29 and of the element 34 for coupling the spokes 29 there are obtained embeddings which counter the thrust exerted by the liquid on the membrane and, thus, on the relative frame 37 during permeation. Thus, the frame 37 is constrained in the direction of the axis of the disc 1 at the internal and external diameter. The two side elements 48 of the frame 37, due to the thrust of the liquid on the membrane 2 could however still be deformed in the plane of the membrane 2, in the accentuated manner shown in Fig 12 and in the direction in which the liquid permeates the membrane 2, as illustrated in Fig 13. With the aim of preventing deformations of this type which would create outlets for the liquid which would thus escape filtration, there is provided for a further sliding component 49 which, inserted in a suitable seat 50 of the spoke 29 and bolted thereto at the end 51 farthest from the axis, contributes to blocking the membrane-holding frame 37. Such component 49, illustrated in Fig 14, has a T-shaped portion 52 which ends up fitted, following a radial movement from the external towards the axis of the machine, in a special seat 50 obtained in the spoke 29. In order to allow the insertion of this sliding component 49 as described, in the closing element 34 for coupling the spokes 29 and in the section 45 of the frame 37 at a greater distance from the axis there are provided grooves 53 and 54 at the zone in which such movement would otherwise generate an interference. The grooves, particularly observable in Fig 11, partly reproduce the shape of the seat 50 of the T-shaped portion 52.

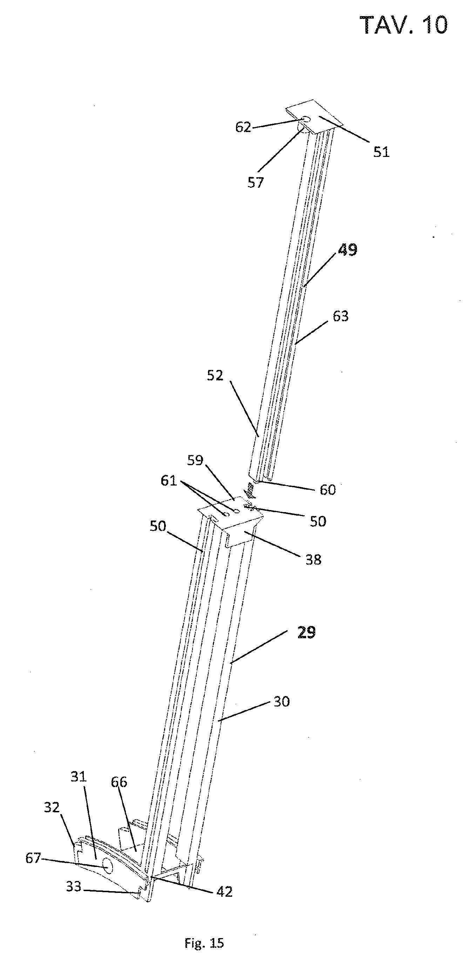

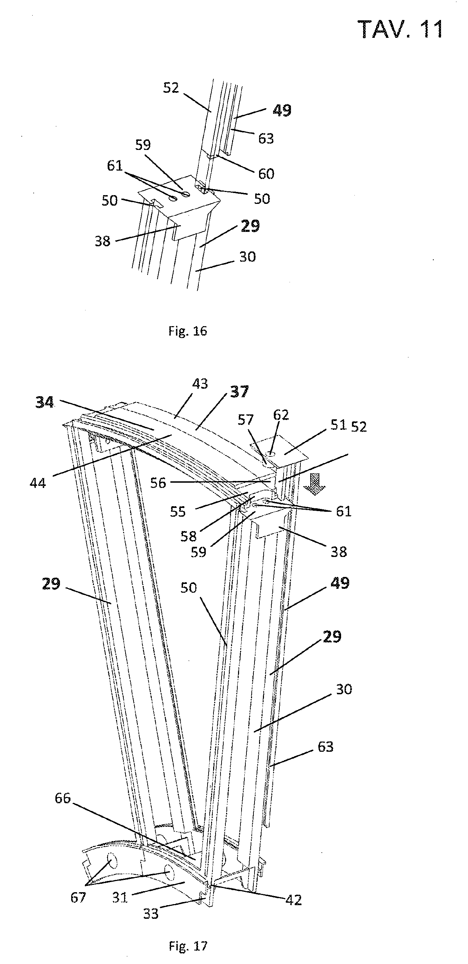

At the end of the radial movement, the outermost part 51 of the component 49 which laterally supports the frame 37 is positioned on two suitably shaped parts 55 and 56, respectively of the closing element 34 for coupling the spokes 29 and of the membrane-holding frame 37, arranged at the two sides of such components: the result is the completion of the outer surface of the disc 1. Regarding this, see Fig 15, Fig 16, Fig 17 and Fig 18.

From what has been described, it can be observed how the closure of the disc 1 along the outer circumference, partly obtained from the elements 34 for coupling the spokes 29, is completed by the section 45 of the membrane-holding frame 37 at a greater distance from the axis and the outermost part 51 of the component 49 for laterally supporting the frame 37. For the sake of simplicity, such component 49 will be indicated hereinafter as a side cover.

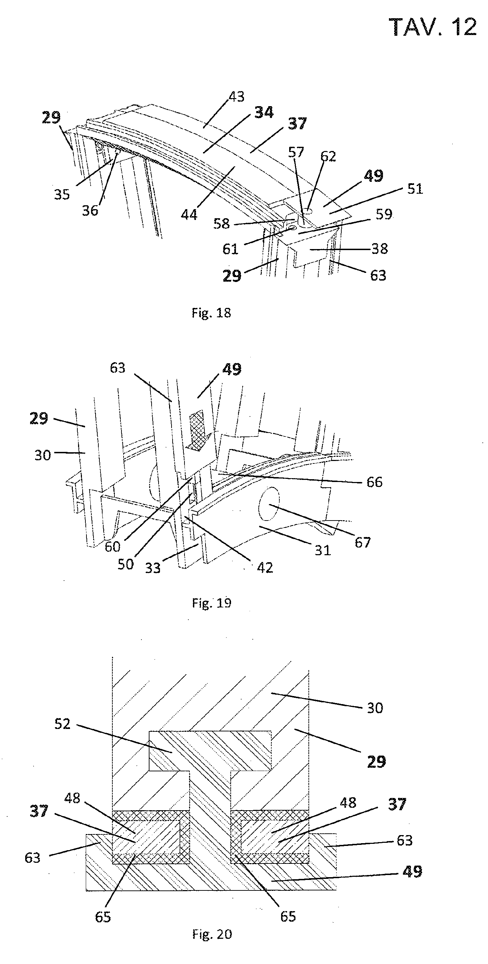

Following the radial approaching movement, a cylindrical element 57, arranged beneath the head 51 of the side cover 49, ends up fitted in the seat 58 specially obtained at the end of the closing element 34 for coupling the spokes 29, until it comes to contact with the head 59 of the spoke 29. Simultaneously, in the part nearer to the axis of the machine, the foot 60 of the side cover 49 is lodged in the seat 42 obtained in the circumferential part 31 of the radial element 29 and also intended to accommodate the lower section 41 of the frame 37 of the filter membrane 2 (Fig 19). At this point, the side cover 49 is bolted, at the outermost part 51, to the head 59 of the spoke 29 in which there are two holes 61 specifically provided for fastening the two side covers 49, arranged at the two sides of the spoke 29. A screw is inserted through the radial hole 62 of the cylindrical element 57 of the side cover 49 and the corresponding hole 61 on the spoke 29. This allows preventing the only possible movement of the side cover 49, i.e., translation in the radial direction towards the outside of the machine.

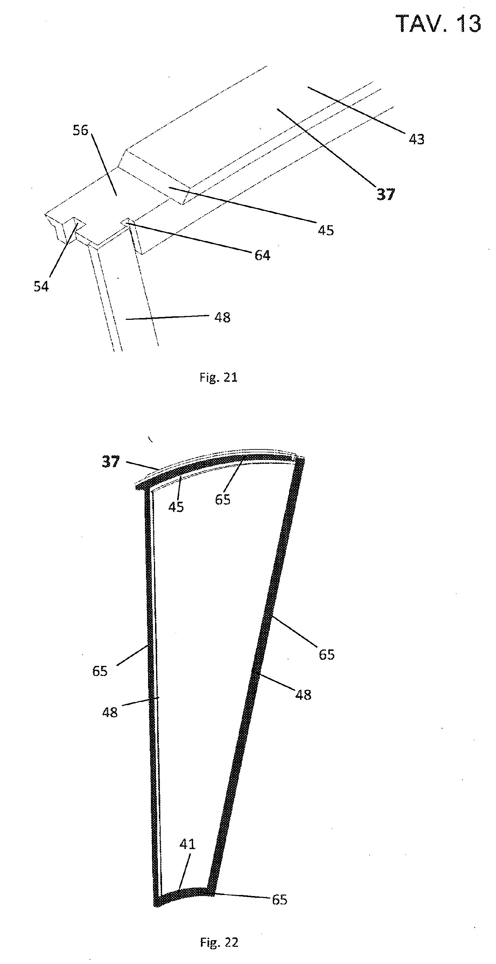

The application of the side cover 49 as described has the purpose of preventing possible deformation of the frame 37 due to the thrust of the liquid on the membrane 2, as illustrated in Fig 12 and in Fig 13. In particular, the deformation in the plane of the membrane 2 (Fig 12) is countered by a tooth 63 arranged at the two sides of the side cover 49 and which extends over the entire radial length of such component, thus surrounding the entire side element 48 of the membrane-holding frame 37. Fig 20 shows - in cross-section - the coupling of the various parts: each side cover 49 surrounds the radial elements 48 of two adjacent frames 37, arranged at the spoke 29 in which it is inserted. In order to prevent the interference between the tooth 63 of the side cover 49 and the section 45 of the frame 37 at a greater distance from the axis of the disc 1, during the radial insertion movement described above, there is obtained - on the two sides of the section 45 of the frame 37 - a suitable groove 64 which allows the passage of the tooth 63. Such solution is illustrated in Fig 21.

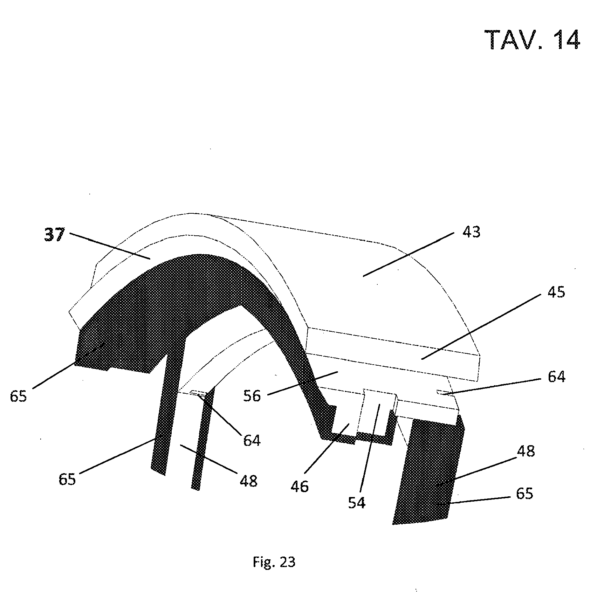

Fig 20 also illustrates the profile of the gasket 65 used for preventing possible leakage of liquid towards outside the disc 1 to the detriment of correct filtration. Such gasket 65 is inserted along the edge of the membrane-holding frame 37, for the two side elements 48 and for the section 41 closest to the axis of the disc 1. At the outer section 45, instead, the gasket 65 is applied on the tooth 46, in a manner similar to that of the other sides. For a better understanding of what has been described above, reference may be made to Fig 22 and Fig 23.

### Alternative embodiment

It is obvious that in further alternative embodiments still falling within the concept solution under the embodiment illustrated above and claimed hereinafter, the rotary disc filter structure according to the present invention may be obtained using equivalent technical and mechanical materials, i.e. provided with further supplementary solutions, same case applying to all configurations of the respective components which may vary to suit the purpose.

### Advantages of the invention

As observable from the detailed description above regarding a preferred embodiment and from the previously indicated variant embodiment, the rotary disc filter structure according to the present invention offers advantages corresponding to the attainment of the preset objects as well as other objects:
actually, it integrates a functional, modular and economic solution concept suitable to maximise the filter surface, allowing limiting the section of the portions of the membrane-holding framework to the advantage of the filter surface; wherein it would otherwise require, considering the same material, to increase the section thereof with the aim of obtaining a greater flexural rigidity; this allows providing the framework made of plastic material, and not necessarily metal, with the advantage of reducing the weight of the machine.

### KEY TO THE REFERENCE NUMBERS

1) base module - filter disc
2) membrane
3) annular sections
4) first central drum section or portion
5) second central drum section or portion
6) flanges of the central drum sections or portions
7) pins of the flanges of the central drum sections or portions
8) holes of the flanges of the central drum sections or portions
9) framework modules
10) means for coupling the framework modules
11) perforated triangular plates of the means for coupling the framework modules
12) perforated triangular plates of the framework modules
13) rolling wheels of the central drum sections or portions
14) relative pin
15) plates for relative support to the framework modules
16) washing pipes
17) relative perforated flanges
18) vertical washing pipes
19) relative distal end
20) washing nozzles
21) duct for collecting and discharging washing waste water and relative sections
22) flanges of the sections of the duct for collecting and discharging washing waste water
23) threaded portion of the pins of the flanges of the central drum sections or portions
24) base of the non-threaded portion of the pins of the flanges of the central drum sections or portions
25) openings (25) that are obtained on the side surface of the drum due to the presence of the pins of the flanges of the central drum sections or portions
26) autonomous spacer pin
27) relative threaded end
28) relative bases of the non-threaded parts
29) spokes of the disc
30) relative radial development portion
31) relative circumferential development portion
32) front profile of the circumferential development portion
33) rear profile of the circumferential development portion
34) circumferential closure element
35) inner fms of the circumferential closure element
36) holes of the inner fins of the circumferential closure element
37) membrane-holding framework
38) surfaces - on the two sides - of the most distal part of the spokes
39) relative holes
40) annular surfaces formed by the joining of the circumferential development portions of the spokes of the disc
41) lower part (i.e. innermost part) of the membrane-holding framework
42) relative seat in the circumferential development portion of the spoke of the disc
43) outermost part of the membrane-holding framework
44) relative complementary part in the circumferential closure element
45) section of the membrane-holding framework at a greater distance from the axis (i.e. inner face of the outermost part of the membrane-holding framework)
46) tooth developed therein
47) relative seat in the circumferential closure element
48) side elements of the membrane-holding framework
49) side cover of the spokes
50) relative seat in the spokes
51) distal end side cover of the spokes
52) inner T-shaped profile of the side cover of the spokes
53) groove in the circumferential closure element for the passage of the inner T-shaped profile of the side cover of the spokes
54) groove in the section of the membrane-holding framework at a greater distance from the axis for the passage of the inner T-shaped profile of the side cover of the spokes
55) abutment in the circumferential closure element for distal end side cover of the spokes
56) abutment in the membrane-holding framework for distal end side cover of the spokes
57) the cylindrical element arranged beneath the distal end of the side covers of the spokes
58) relative seat in the circumferential closure element
59) head of the spoke
60) foot of the side covers of the spokes
61) holes in the head of the spoke for fastening side covers of the spokes
62) hole passing through the cylindrical element arranged beneath the distal end of the side covers of the spokes
63) tooth at the two sides of the side cover over the entire relative radial length
64) groove for the passage of said tooth in the section of the membrane-holding framework at a greater distance from the axis (i.e. inner face of the outermost part of the membrane-holding framework)
65) gasket within the membrane-holding framework
66) hollow cylindrical element at the feet of each spoke
67) relative through hole

## Claims

1. Rotary disc filter structure, of the type made up of a central drum, bearing on the outer surface filter discs parallel to each other, arranged coaxially transversal with respect to the drum and provided with filter membrane on the two surfaces orthogonal to the axis, comprising a plurality of modules with annular section (3) made up of:
- pairs of spokes (29) provided with means for fixing to the drum (4, 5) and shaped with a radially part (30) and a circumferential part (31) which is consecutively associable in series with the circumferential part (31) of the adjacent spoke (29) to form two annular surfaces (40) on the two opposite surfaces of the disc (1) associable to said drum (4, 5) and between which is defined a conduit for the passage of the liquid between the chambers inside each annular section (3) of the disc (1),
- circumferential closing elements (34) for closing the annular sections (3) arranged consecutively in series between each pair of said spokes (29),
- frames (37) supporting the filter membrane (2) and reproducing the perimeter of said annular sections (3), the frames (37) having a radial inner section (41) constrained to said fixing means and to said circumferential parts (31) of said pairs of spokes (29), and a radial outer section (45) constrained to said circumferential closing elements (34),
**characterised in**:
- side covers (49) for the radially parts (30) of said pairs of spokes (29) entrapping the radial sides of said frames (37) and having a
- T-shaped portion (52) fitted into a corresponding seat (50) obtained in the spoke (29), for such purpose grooves (53, 54) are provided in the closing element (34) coupling the spokes (29) and in the radial outer section (45) of the frame (37),
- the head (51) of the side covers (49) abutting two suitably shaped parts (55) and (56) respectively of the closing element (34) for coupling the spokes (29) and of the membrane-holding frame (37) arranged at the two sides of such components (34, 37),
- a cylindrical element (57) being provided under the head (51) of the side covers (49) interacting with a corresponding seat (58) obtained at the end of the closing element (34) until contacting the head (59) of the spoke (29),
- the foot (60) of the side covers (49) engaging a seat (42) obtained in the circumferential part (31) of the spoke (29) and also intended to accommodate the radial inner section (41) of the frame (37) of the filter membrane (2),
- radial holes (62) being provided on the head (51) of the side covers (49) passing through said cylindrical elements (57) wherein bolts are inserted for fixing the head (59) to the spokes (29) which are provided with two corresponding holes (61).

2. Rotary disc filter structure according to claim 1, wherein in said said membrane-holding frame (37)
- the radial inner section (41) is interacting with the complementary seat (42) obtained in the radial outer part of the circumferential portion (31) of the spoke (29),
- the radial outer section (45) comprises a projection (46) interacting with a complementary seat (47) of the closing element (34) for coupling the spokes (29).

3. Rotary disc filter structure according to claim 1 or 2, **characterised in that** said circumferential closing elements (34) for closing the annular sections (3) arranged consecutively in series between each pair of spokes (29) have - in the inner part - two fins (35) arranged radially and bearing two holes (36) which fit with corresponding surfaces (38) obtained at the two sides of the radially outermost part of the spokes (29) provided with holes (39) for coupling - by means of bolts - said fins (35) of the closing element (34) to the spokes (29).

4. Rotary disc filter structure according to any of the preceding claims, **characterised in that** said side covers (49) have on the two sides a tooth (63) which extends over the entire radial length and engages the entire side section (48) of the membrane-holding frame (37).

5. Rotary disc filter structure according to any of claims 2 to 4, **characterised in that** it comprises a gasket (65) inserted along the edge of the two side elements (48) of the membrane-holding frame (37) and of the radial inner section (41) whereas at the radial outer section (45) said gasket (65) is applied onto said projection (46).

## Patentansprüche

1. Drehbare Scheibenfilterstruktur mit einer mittigen Trommel, die an ihrer Außenseite zueinander parallele Filterscheiben trägt, die quer zur Trommel koaxial ausgerichtet sind und auf ihren beiden orthogonal zur Trommelachse ausgerichteten Flächen Filtermembrane haben, wobei die Scheibenfilterstruktur aus einer Mehrzahl von Modulen in Form von Kreisringsektoren (3) besteht und jedes Modul besteht aus
- einem Paar von Speichen (29), die Mittel für ihre Befestigung an der Trommel (4, 5) haben und aus einem radialen Teil (30) und einem sich in Umfangsrichtung erstreckenden Teil (31) bestehen, der in Reihe mit dem Umfangsteil (31) der anschließenden Speiche (29) koppelbar ist, wodurch zwei Ringflächen (40) auf den beiden gegenüberliegenden Seiten der mit der Trommel (4, 5) verbindbaren Filterscheibe gebildet werden, zwischen denen ein Durchtrittskanal für die Flüssigkeit zwischen den Kammern innerhalb jedes Kreisringsektors (3) der Scheibe (1) ausgebildet ist,
- in Umfangsrichtung verlaufende Abschlusselemente (34) für die Kreisringsektoren (3), die aufeinander folgend zwischen jeweils zwei Speichen (29) angebracht sind,
- Rahmen (37), die die Filtermembrane (2) halten und in ihrer Form dem Außenumfang der Kreisringsektoren (3) entsprechen und die ein radial inneres Segment (41),das mit Befestigungsmitteln und den Umfangsteilen (31) der Speichenpaare (29) verbunden ist, und ein radial äußeres Segment (45) haben, das mit den in Umfangsrichtung verlaufenden Abschlusselementen (34) verbunden ist,
**gekennzeichnet durch**:
- Seitenabdeckungen (49) für die radialen Teile (30) der Speichenpaare (29), die die radialen Seiten der Rahmen (37) einschließen und
- einen im Querschnitt T-förmigen Abschnitt (52) haben, der in einen entsprechenden Sitz (50) der Speiche (29) eingreift, wozu Nuten (53, 54) in dem die Speichen (29) miteinander verbindenden Abschlusselement (34) und in das radial äußere Segment (45) des Rahmens (37) ausgebildet sind,
- wobei der Kopf (51) der Seitenabdeckungen (49) an zwei entsprechend geformten Teilen (55 bzw. 56) des Abschlusselementes (34) für die Verbindung der Speichen (29) und des Rahmens (37) zu beiden Seiten dieser Komponenten (34, 37) anliegt,
- und unter dem Kopf (51) der Seitenabdeckungen (49) ein Zylinderelement (57) vorgesehen ist, das in einen entsprechenden Sitz (58) am Ende des Abschlusselementes (34) eingreift, bis es in Kontakt mit dem Kopf (59) der Speiche (29) kommt,
- während der Fuß (60) der Seitenabdeckungen (49) in einen Sitz (42) im Umfangsteil (31) der Speiche (29) eingreift, der auch dazu dient, das radial innere Segment (41) des Rahmens (37) der Filtermembran (2) aufzunehmen,
- wobei am Kopf (51) der Seitenabdeckungen (49) radiale Bohrungen (62) ausgebildet sind, die sich **durch** die Zylinderelemente (57) erstrecken und in die Bolzen eingesetzt sind, um den Kopf (59) mit den Speichen (29) zu verbinden, die zwei entsprechende Bohrungen (61) haben.

2. Drehbare Scheibenfilterstruktur nach Anspruch 1, **dadurch gekennzeichnet, dass** in dem Rahmen (37) für die Halterung der Membrane
- das radial innere Segment (41) mit einem entsprechenden Sitz (42) zusammenwirkt, der in dem radial äußeren Abschnitt des Umfangsteils (31) der Speiche (29) ausgebildet ist,
- das radial äußere Segment (45) einen Vorsprung (46) hat, der mit einem entsprechenden Sitz (47) des Abschlusselementes (34) für die Verbindung der Speichen (29) zusammenwirkt.

3. Drehbare Scheibenfilterstruktur nach Anspruch 1 oder 2, **dadurch gekennzeichnet, dass** die in Umfangsrichtung verlaufenden Abschlusselemente (34) zum Verbinden der Kreisringsektoren (3) der Speichenpaare (29) am Innenteil zwei radiale Zungen (35) mit zwei Bohrungen (36) haben, die zu entsprechenden Flächen mit Bohrungen (39) am radial äußersten Abschnitt der Speichen (29) ausgerichtet sind, so dass über Bolzen die Zungen (35) des Abschlusselementes (34) mit den Speichen (29) verbunden werden können.

4. Drehbare Scheibenfilterstruktur nach einem der vorhergehenden Ansprüche, **dadurch gekennzeichnet, dass** die Seitenabdeckungen (49) auf beiden Seiten eine Rippe (63) haben, die sich über die gesamte Radiallänge erstreckt und mit dem gesamten Seitenabschnitt (48) des Rahmens (37) in Eingriff ist.

5. Drehbare Scheibenfilterstruktur nach einem der Ansprüche 2 bis 4, **gekennzeichnet durch** eine Dichtung (65), die in eine Kante der beiden Seitenelemente (48) des Rahmens (37) und des radial inneren Segments (41) eingesetzt ist, während sie im radial äußeren Segment (45) auf den Vorsprung (46) aufgesetzt ist.

## Revendications

1. Structure rotative de filtres à disques comprenant un tambour central portant à sa surface extérieure des disques filtrants parallèles coaxiaux l'un par rapport à l'autre et orientés dans le sens transversal au tambour et munis sur leurs deux surfaces de membranes filtrantes qui s'étendent orthogonalement à l'axe du tambour , ladite structure étant formée de modules en forme de secteurs d'annulaires (3), chaque module comprenant
- une paire de rayons (29) munis de moyens de fixation au tambour (4, 5) et constitués d'une partie radiale (30) et d'une partie (31) s'étendant dans le sens de la circonférence, ladite partie (31) pouvant s'accoupler avec la partie circonférentielle (31) voisine portant le rayon suivant (29) et formant entre elles deux surfaces annulaires sur les deux côtés opposés du filtre à disques relié au tambour (4, 5), entre elles étant formé un canal de passage pour le liquide entre les chambres de chaque secteur annulaire (3) du disque (1),
- des éléments de fermeture (34) s'étendant dans le sens de la circonférence pour les secteurs annulaires (3) et positionnés consécutivement entre chaque paire de rayons (29),
- des cadres (37) portant les membranes filtrantes (2) correspondant dans leur forme à la périphérie des secteurs annulaires (3) et qui sont munis d'un segment de cercle radialement intérieur (41) et relié à la partie circonférentielle (31) des paires de rayons (29) et d'un segment (45) de cercle radialement extérieur relié à l'élément de fermeture (34), **caractérisée par** :
- des fermetures latérales (49) pour les parties radiales (30) des paires de rayons (29) et qui renferment les côtés radiaux des cadres (37) et
- un profil en T (52) s'engageant dans un siège (50) du rayon (29), des rainures (53, 54) étant formées à cette fin dans l'élément de fermeture (34) qui relie les rayons (29) et dans le segment extérieur (45) du cadre (37),
- une tête (51) des fermetures latérales (49) qui se pose sur deux parties (55, 56) de l'élément de fermeture (34) reliant les rayons (29) du cadre et qui appuie sur les deux composants (34, 37),
- sous la tête (51) des fermetures latérales (49) étant prévu un élément cylindrique (57) s'engageant dans un siège (58) à l'extrémité de l'élément de fermeture (34) jusqu'au contact avec la tête (59) du rayon (29),
- tandis que le pied (60) des éléments de fermeture (34) s'engage dans un siège (42) de la partie circonférentielle (31) du rayon (29) qui sert à maintenir le segment radialement intérieur (41) du cadre (37) de la membrane filtrante (2),
- sur la tête (51) des fermetures latérales (49) étant prévus des perçages radiaux (62) passant à travers des éléments cylindriques (57) et recevant des goujons pour relier la tête (59) au rayon (29) muni de deux perçages (61).

2. Structure rotative de filtres à disques selon la revendication 1, **caractérisée par le fait que** dans le cadre (37) pour recevoir les membranes
- le segment radialement intérieur (41) est en interaction avec un siège correspondant (42) formé dans la partie radialement externe de la partie circonférentielle (31) du rayon (29),
- le segment radialement extérieur (45) présente une nervure (46) qui s'engage dans un siège (37) de l'élément de fermeture (34) pour relier les rayons (29).

3. Structure rotative de filtres à disques selon la revendication 1 ou 2, **caractérisée par le fait que** les éléments de fermeture (34) reliant les secteurs annulaires (3) des paires de rayons (29) sont munis sur la partie interne de deux langues radiales (35) ayant deux perçages (36) correspondant aux perçages effectués dans la partie radialement externe des rayons, de sorte que les langues (35) de l'élément de fermeture (34) puissent être relié aux rayons (29).

4. Structure rotative de filtres à disques selon une des revendications précédentes **caractérisée par le fait que** les fermetures (34) latérales (49) sont munies sur leurs deux côtés d'une nervure (63) qui s'étend sur toute la longueur radiale, et qui s'engage sur la totalité de la zone latérale (48) du cadre (37).

5. Structure rotative de filtres à disques selon une des revendications 2 à 4, **caractérisée par** un joint d'étanchéité (65) qui s'engage dans une arête (65) des deux éléments latéraux (48) du cadre (37) et du segment radialement intérieur (41), et s'appuyant sur la nervure (46) du segment radialement extérieur (45).
